# EUROPÄISCHE PATENTANMELDUNG

(11) **EP 3 798 089 A1**
(43) Veröffentlichungstag der Anmeldung: **31.03.2021**
(21) Anmeldenummer: 19199797.2
(22) Anmeldetag: 26.09.2019
(51) Int. Cl.: B61L 15/00, B61L 27/00, H04L 9/00

(54) **EISENBAHNTECHNISCHE ANLAGE UND VERFAHREN ZUM BETREIBEN EINER EISENBAHNTECHNISCHEN ANLAGE**

(71) Anmelder: Siemens Mobility GmbH, 81739 München (DE)
(72) Erfinder: Evers, Bernhard, 38116 Braunschweig (DE); Griebel, Stephan, 38302 Wolfenbüttel (DE)

(57) **Zusammenfassung**

Die Erfindung betrifft eine eisenbahntechnische Anlage (1) mit wenigstens einem Kommunikationsnetzwerk (2), mit einer Vielzahl von mit dem Kommunikationsnetzwerk (2) verbundenen Teilnehmern (3, 3.1, 3.2, 3.3, 3.4) und mit wenigstens einer verteilten Datenbank (4), auf die die Teilnehmer (3, 3.1, 3.2, 3.3, 3.4) Zugriff haben. Um die eisenbahntechnische Anlage (1) effizienter betreiben zu können, ist erfindungsgemäß vorgesehen, dass in der verteilten Datenbank (4) wenigstens eine Nutzungsbedingung der eisenbahntechnischen Anlage (1) abgespeichert ist und eine Nutzungserlaubnis für einen Teilnehmer (3, 3.1, 3.2, 3.3, 3.4) automatisch erteilt wird, wenn die wenigstens eine Nutzungsbedingung für den Teilnehmer (3, 3.1, 3.2, 3.3, 3.4) erfüllt ist.

Die Erfindung betrifft auch ein Verfahren zum Betreiben einer eisenbahntechnischen Anlage (1).

## Beschreibung

Die Erfindung betrifft eine eisenbahntechnische Anlage mit wenigstens einem Kommunikationsnetzwerk, mit einer Vielzahl von mit dem Kommunikationsnetzwerk verbundenen Teilnehmern und mit wenigstens einer verteilten Datenbank, auf die die Teilnehmer Zugriff haben.

Die Erfindung betrifft ferner ein Verfahren zum Betreiben einer eisenbahntechnischen Anlage, die wenigstens ein Kommunikationsnetzwerk mit verbundenen Teilnehmern und wenigstens eine verteilte Datenbank aufweist, auf die die Teilnehmer Zugriff haben.

Eisenbahntechnischen Anlagen der genannten Art sind beispielsweise aus einer Veröffentlichung von Michael Kuperberg, Daniel Kindler, Sabina Jeschke "Are Smart Contracts and Blockchains Suitable for Decentralized Railway Control?", PREPRINT Cornell University (2019), online abrufbar unter https://arxiv.org/abs/1901.06236, bekannt.

In heutigen eisenbahntechnischen Anlagen sind nicht mehr alle Komponenten Teil des gleichen Unternehmens. Häufig stellt ein Unternehmen das Streckennetz zur Verfügung und verschiedene andere Unternehmen können die Strecke mit ihren Fahrzeugen befahren. Der Zugang zum Streckennetz muss selbstverständlich limitiert sein, so dass nur Fahrzeuge das Streckennetz befahren, die nötige Vorschriften erfüllen.

Es ist die Aufgabe der vorliegenden Erfindung, eine eingangs genannte eisenbahntechnische Anlage und ein eingangs genanntes Verfahren bereitzustellen, durch die das Betreiben einer eisenbahntechnischen Anlage optimiert wird und ein technisches und wirtschaftliches Betreiben verbessert wird.

Die eingangs genannte eisenbahntechnische Anlage löst die Aufgabe erfindungsgemäß dadurch, dass in der verteilten Datenbank wenigstens eine Nutzungsbedingung der eisenbahntechnischen Anlage abgespeichert ist und eine Nutzungserlaubnis für einen Teilnehmer automatisch erteilt wird, wenn die wenigstens eine Nutzungsbedingung für den Teilnehmer erfüllt ist.

Das eingangs genannte Verfahren löst die Aufgabe dadurch, dass wenigstens eine Nutzungsbedingung der eisenbahntechnischen Anlage in der verteilten Datenbank abgespeichert wird und eine Nutzungserlaubnis für einen Teilnehmer automatisch erteilt wird, wenn die wenigstens eine Nutzungsbedingung für den Teilnehmer erfüllt ist.

Die erfindungsgemäße Lösung hat den Vorteil, dass die Prüfung der Nutzungsbedingungen der eisenbahntechnischen Anlage automatisiert und dadurch schnell und kostengünstig durchgeführt werden kann. Weiterhin wird erfindungsgemäß sichergestellt, dass sämtliche Bewerber gleichbehandelt werden und keine Bevorzugung oder Diskriminierung stattfinden kann. Die erfindungsgemäße Lösung kann in digitalisierter Form umgesetzt werden, so dass der Durchsatz an Fahrzeugen durch die eisenbahntechnische Anlage als auch die insgesamte Energieeffizienz gesteigert werden kann. Durch die verteilte Datenbank bleibt die Erteilung der Nutzungserlaubnis nachvollziehbar und für jeden Teilnehmer überprüfbar.

Die erfindungsgemäße Lösung kann durch vorteilhafte Ausgestaltungen weiterentwickelt werden, die im Folgenden beschrieben sind.

So kann wenigstens ein Teilnehmer die verteilte Datenbank gespeichert haben und zum Erzeugen neuer Datenblöcke innerhalb der verteilten Datenbank ausgebildet sein. Dies hat den Vorteil, dass der wenigstens eine Teilnehmer in dem Kommunikationsnetzwerk das Erzeugen neuer Datenblöcke übernimmt und die übrigen Teilnehmer einfacher ausgestaltet sein können, beispielsweise weniger Rechenleistung aufweisen.

Zusätzlich oder alternativ kann jeder Teilnehmer die verteilte Datenbank gespeichert haben und zum Erzeugen neuer Datenblöcke innerhalb der verteilten Datenbank ausgebildet sein. Dies hat den Vorteil, dass jeder Teilnehmer die verteilte Datenbank selbst abgespeichert hat und neue Datenblöcke erzeugen kann. Wenn als verteilte Datenbank beispielsweise eine Blockchain genutzt wird, haben sämtliche Teilnehmer nach dieser Ausgestaltung die Funktion des sogenannten Miners, die neue Datenblöcke der Blockchain erstellen können.

In einer vorteilhaften Ausgestaltung kann die wenigstens eine Nutzungsbedingung in Form eines Smart Contracts ausgebildet sein. Bei Smart Contracts handelt es sich grundsätzlich um eine oder mehrere Wenn-Dann-Regeln, die in der verteilten Datenbank als Programm abgelegt sind. Wenn alle Bedingungen des Smart Contracts erfüllt sind, wird automatisch ein neuer Datenblock erzeugt und damit eine Nutzungserlaubnis für den entsprechenden Teilnehmer erteilt.

Um die verteilte Datenbank besonders fälschungssicher auszubilden, kann diese als Blockchain ausgebildet sein. Ferner kann die wenigstens eine Nutzungsbedingung sämtliche für einen Zugang zu der eisenbahntechnischen Anlage nötigen Zugangsbedingungen umfassen. Dies hat den Vorteil, dass sämtliche Zugangsbedingungen automatisch abgeprüft werden.

Um eine Überprüfung der Teilnehmer möglichst einfach zu gestalten, können sich Teilnehmer per PKI-Verfahren identifizieren. Das PKI (Public Key Infrastructure) ist ein kryptographisches System, das digitale Zertifikate ausstellen, verteilen und prüfen kann. Die innerhalb einer PKI ausgestellten Zertifikate werden bereits sehr häufig zur Absicherung rechnergestützter Kommunikation verwendet und ist daher einfach verfügbar. So kann auch das vorteilhafte Proof-of-Athority Verfahren angewendet werden.

Schließlich betrifft die Erfindung auch noch ein Computerprogrammprodukt mit Programmbefehlen zur Durchführung des erfindungsgemäßen Verfahrens.

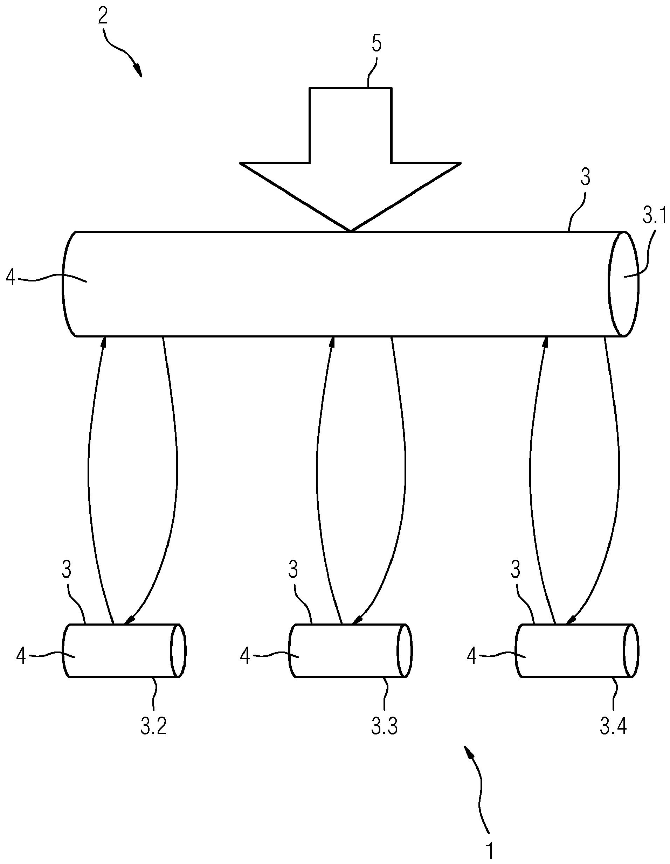

Im Folgenden wird die Erfindung mit Bezug auf die beispielhafte Ausführungsform in der beigefügten Figur beschrieben.

Die einzige Figur zeigt eine schematische Darstellung einer beispielhaften Ausführungsform einer erfindungsgemäßen eisenbahntechnischen Anlage.

Die eisenbahntechnische Anlage 1 in der beispielhaften Ausführungsform in der Figur umfasst ein Kommunikationsnetzwerk 2, mehrere Teilnehmer 3, die über das Kommunikationsnetzwerk 2 verbunden sind, und eine verteilte Datenbank 4, die auf den Teilnehmern 3 abgespeichert ist.

Die eisenbahntechnische Anlage 1 umfasst die üblichen Komponenten wie beispielsweise ein Streckennetz mit Schienen, Fahrleitungen, Feldelementen und Fahrzeugen.

Das Kommunikationsnetzwerk 2 der eisenbahntechnischen Anlage 1 kann beispielsweise funkbasiert über WLAN, 5G, LTE oder ähnliches hergestellt werden. Alternativ kann es auch kabelgebunden als beispielsweise ein Ethernet-Netzwerk ausgebildet sein. Die Teilnehmer des Kommunikationsnetzwerks 2 sind beispielsweise Fahrzeuge der eisenbahntechnischen Anlage 1, Leitstellen, Stellwerke oder auch Feldelemente. Jeder Teilnehmer 3 ist hierbei eine Art von Computer, der eine Verbindung mit dem Kommunikationsnetzwerk herstellen kann.

Bei der beispielhaften Ausführungsform in der Figur ist die verteilte Datenbank 4 als eine Blockchain ausgebildet, die auf jedem Teilnehmer 3 abgespeichert ist. Der Teilnehmer 3.1 ist dabei als ein aktiver Knoten, d.h. als ein Miner ausgebildet, der neue Datenblöcke der Blockchain erzeugen kann. Die übrigen Teilnehmer 3.2, 3.3, 3.4 sind als passive Teilnehmer ausgebildet, die keine neuen Datenblöcke erzeugen können und somit keine Minerfunktion haben. Alternativ können aber auch mehrere oder alle Teilnehmer 3 diese Minerfunktion aufweisen, neue Datenblöcke erzeugen zu können.

Die verteilte Datenbank 4 ist erfindungsgemäß so ausgestaltet, dass vorbestimmte Nutzungsbedingungen der eisenbahntechnischen Anlage darin abgespeichert sind. Diese Nutzungsbedingungen umfassen insbesondere sämtliche für einen Zugang zu der eisenbahntechnischen Anlage nötigen Zugangsbedingungen, die üblicherweise vom Betreiber des Streckennetzes aufgestellt sind. Dies sind die für das Streckennetz der eisenbahntechnischen Anlage 1 geltenden Zugangs- und Nutzungsbedingungen. Diese geben umfangreiche Informationen, wie ein Zugang zum Schienennetz möglich ist und was beispielsweise bei der Anmeldung von Fahrplantrassen durchzuführen ist. Diese Nutzungsbedingungen sind bei der beispielhaften Ausführungsform in der Figur in Form eines Smart Contracts in der verteilten Datenbank 4 hinterlegt.

Zum Betrieb der eisenbahntechnischen Anlage 1 werden die Nutzungsbedingungen durch den Betreiber in Form des Smart Contracts im Teilnehmer 3.1 hinterlegt, was durch einen Schritt 5 in der Figur dargestellt ist. Der Teilnehmer 3.1 hinterlegt den Smart Contract in einem Datenblock der als Blockchain ausgebildeten verteilten Datenbank 4. Der Teilnehmer 3.1 übernimmt hierbei bei der beispielhaften Ausführungsform in der Figur die Funktion eines Masterrechners oder Miners, der neue Datenblöcke der Blockchain erzeugt. Um den neuen Datenblock zu verifizieren, wird bei der beispielhaften Ausführungsform in der Figur ein Proof-of-Authority-Verfahren angewendet, bei dem sich der Teilnehmer 3.1 per PKI identifiziert. Anhand der PKI können alle übrigen Teilnehmer 3 überprüfen, ob wirklich der dafür vorgesehene Teilnehmer 3.1 den neuen Datenblock erzeugt hat. Der neue Datenblock 3 wird vom Teilnehmer 3.1 mit der gesamten neuen Blockchain an sämtliche Teilnehmer des Kommunikationsnetzwerkes 2 verteilt, die die aktualisierte Blockchain abspeichern.

Damit sind die Zugangsbedingungen zum Streckennetz der eisenbahntechnischen Anlage 1 in Form der Nutzungsbedingungen als Smart Contract in der verteilten Datenbank 4 nachvollziehbar, fälschungssicher und automatisch überprüfbar hinterlegt. Grundsätzlich handelt es sich bei einem Smart Contract um Wenn-Dann-Regeln. Wenn eine in Form der Wenn-Dann-Regeln hinterlegte Bedingung erfüllt ist, wird automatisch die hinterlegte Konsequenz ausgeführt, hier beispielsweise das Erteilen einer Nutzungserlaubnis in Form einer Netzzugangserlaubnis für die eisenbahntechnische Anlage 1. Diese Bedingungen, die im Smart Contract festgehalten sind, sind an jeden Teilnehmer 3 verteilt und dadurch durch jeden nachvollziehbar. Beispielsweise können die Teilnehmer 3.2, 3.3, 3.4 auf Fahrzeugen ausgebildet sein. Diese müssen hierfür nicht notwendigerweise zusätzliche Rechnerkapazitäten bereitstellen, sondern können auch bestehende Rechnerkapazitäten auf den Fahrzeugen benutzen, um die verteilte Datenbank bzw. die Blockchain zu hinterlegen.

Im Betrieb der eisenbahntechnischen Anlage kann jedes Fahrzeug, welches das Streckennetz der eisenbahntechnischen Anlage 1 nutzen will, seine Zugangsdaten an den Teilnehmer 3.1 schicken. Der in der verteilten Datenbank 4 hinterlegte Smart Contract prüft anschließend automatisch die Nutzungsbedingungen und erteilt sofort eine Nutzungserlaubnis, wenn alle Voraussetzungen des Smart Contracts erfüllt sind. Dies wird nachvollziehbar und fälschungssicher in der verteilten Datenbank 4 hinterlegt und an alle Teilnehmer 3 verteilt.

Die vom Teilnehmer 3.1 mittels des Smart Contracts überprüften Daten können beispielsweise umfassen:
a) eine Identifikationsnummer,
b) Kontostand,
c) Gewicht (beispielsweise zur Berechnung eines Preises für Trassenabnutzung),
d) Maße (für Lichtraumprofil)
e) angestrebter Fahrplan,
f) Energieverbrauch (zur Optimierung der Energienutzung).

Weitere Bedingungen können gegebenenfalls in dem Smart Contract implementiert werden, um beispielsweise das Trassen- und Energiemanagement der eisenbahntechnischen Anlage 1 zu optimieren. Denkbar sind ebenfalls Versteigerungen von Trassen, teurere Vorreservierungen von Trassen, Malus und Bonus für Zugeständnisse bei Trassenvergaben, etc.

Der Smart Contract bzw. der Miner können gegebenenfalls auch einen Trassennutzungsplan an das Fahrzeug ausgeben und anschließend wieder vom Fahrzeug auf den Weg durch das Streckennetz genutzt werden, um auf dessen Einhaltung zu verweisen.

## Patentansprüche

1. Eisenbahntechnische Anlage (1)
mit wenigstens einem Kommunikationsnetzwerk (2),
mit einer Vielzahl von mit dem Kommunikationsnetzwerk (2) verbundenen Teilnehmern (3, 3.1, 3.2, 3.3, 3.4) und
mit wenigstens einer verteilten Datenbank (4), auf die die Teilnehmer (3, 3.1, 3.2, 3.3, 3.4) Zugriff haben,
**dadurch gekennzeichnet, dass**
in der verteilten Datenbank (4) wenigstens eine Nutzungsbedingung der eisenbahntechnischen Anlage (1) abgespeichert ist und eine Nutzungserlaubnis für einen Teilnehmer (3, 3.1, 3.2, 3.3, 3.4) automatisch erteilt wird, wenn die wenigstens eine Nutzungsbedingung für den Teilnehmer (3, 3.1, 3.2, 3.3, 3.4) erfüllt ist.

2. Eisenbahntechnische Anlage (1) nach Anspruch 1,
**dadurch gekennzeichnet, dass**
wenigstens ein Teilnehmer (3.1) die verteilte Datenbank (4) gespeichert hat und zum Erzeugen neuer Datenblöcke innerhalb der verteilten Datenbank (4) ausgebildet ist.

3. Eisenbahntechnische Anlage nach Anspruch 1 oder 2,
**dadurch gekennzeichnet, dass**
jeder Teilnehmer (3.1) die verteilte Datenbank (4) gespeichert hat und zum Erzeugen neuer Datenblöcke innerhalb der verteilten Datenbank (4) ausgebildet ist.

4. Eisenbahntechnische Anlage (1) nach einem der oben genannten Ansprüche,
**dadurch gekennzeichnet, dass**
die wenigstens eine Nutzungsbedingung in Form eines Smart Contracts ausgebildet ist.

5. Eisenbahntechnische Anlage (1) nach einem der oben genannten Ansprüche,
**dadurch gekennzeichnet, dass**
die verteilte Datenbank (4) als Blockchain ausgebildet ist.

6. Eisenbahntechnische Anlage (1) nach einem der oben genannten Ansprüche,
**dadurch gekennzeichnet, dass**
die wenigstens eine Nutzungsbedingung sämtliche für einen Zugang zu der eisenbahntechnischen Anlage (1) nötigen Zugangsbedingungen umfasst.

7. Eisenbahntechnische Anlage (1) nach einem der oben genannten Ansprüche,
**dadurch gekennzeichnet, dass**
sich Teilnehmer (3, 3.1, 3.2, 3.3, 3.4) per PKI-Verfahren identifizieren.

8. Verfahren zum Betreiben einer eisenbahntechnischen Anlage (1), die wenigstens ein Kommunikationsnetzwerk (2) mit verbundenen Teilnehmern (3, 3.1, 3.2, 3.3, 3.4) und wenigstens eine verteilte Datenbank (4) aufweist, auf die die Teilnehmer (3, 3.1, 3.2, 3.3, 3.4) Zugriff haben,
**dadurch gekennzeichnet, dass**
wenigstens eine Nutzungsbedingung der eisenbahntechnischen Anlage (1) in der verteilten Datenbank (4) abgespeichert wird und
eine Nutzungserlaubnis für einen Teilnehmer (3, 3.1, 3.2, 3.3, 3.4) automatisch erteilt wird, wenn die wenigstens eine Nutzungsbedingung für den Teilnehmer (3, 3.1, 3.2, 3.3, 3.4) erfüllt ist.

9. Computerprogrammprodukt mit Programmbefehlen zur Durchführung des Verfahrens nach Anspruch 8.
